# EUROPEAN PATENT APPLICATION

(11) **EP 2 098 976 A1**
(43) Date of publication of application: **09.09.2009**
(21) Application number: 08170742.4
(22) Date of filing: 04.12.2008
(51) Int. Cl.: G06F 21/24

(54) **Secure method and system for the upload of data**

(30) Priority: 04.12.2007 IE 20070880
(71) Applicant: Orbis Patents Limited, Dublin 3 (IE)
(72) Inventor: Flitcroft, Daniel Ian, Dun Laoghaire County Dublin (IE); O'Donnell, Graham, Dun Laoghaire County Dublin (IE)
(74) Representative: Schütte, Gearoid

(57) **Abstract**

The present invention is directed to a secure method and system to allow the upload of data from one of a plurality of communication devices to a data processing unit over a data transmission network. A publicly disseminated data address may be freely distributed to third parties by an individual. This publicly disseminated data address is mapped to a master data address via a one-way linked list mechanism which does not incorporate any alphanumerical relationship between the publicly disseminated data address and the master data address. Data stored at the master address can be accessed by the third party through the publicly disseminated address without revealing the master address to the third party. This allows data to be uploaded by a third party to the master address on behalf of the individual without the risk that the third party will access all the data stored at the master address through knowledge of the master address. This is particularly good for utility companies, service industries such as insurance companies and financial institutions.

## Description

### Introduction

This invention relates to a secure method and system to allow the upload of data from one of a plurality of communication devices to a data processing unit over a data transmission network.

In an increasingly digitally based world, sensitive data containing personal information relating to individuals and their assets is routinely stored and transmitted between data processing units and communication devices over digital networks. With the advent of faster transmission rates and more efficient processing technologies, the quantity of data that is transmitted and processed in the digital networks has grown greatly. Large supercomputers, acting as data processing units, process huge amounts of data on a daily basis for various organisations including utility companies, governmental departments, financial institutions and services industries such as insurance companies, airline companies and the like.

The advantage of using digital networks for processing this data is that the organisations such as the utility companies, the governmental departments, the financial institutions and the services industry companies can offer their assistance and their services over the internet and/or telephone. By offering their assistance and services over digital mediums such as the internet and mobile telephones, an individual may access and make use of an organisation's assistance and services at a time that is convenient for the individual. The individual is not bound to the working hours of the organisation. In both cases of the internet and the mobile telephone, access to the personal data files of an individual must be permitted, and in particular, the individual must be able to upload data to the relevant personal information data files over the internet or cellular network to update fields in the personal information data file for the individual. For example, an individual may wish to upload a tax return to the taxation department in their country, an individual may wish to change a seat booking on an aircraft or an individual may wish to change their contact details with their local electricity supplier. In all of these examples, information will have to be upload to an existing personal data file, whether it be the individual's tax records, the individual's airline booking or the individual's electricity account respectively.

Clearly, such personal information data about an individual can be highly valuable. It is therefore of utmost importance that the access, an particularly the uploading of data to the personal files of the individual be permitted in a safe and secure manner. Using current systems, the uploading of data to a data field is accomplished by transmitting the data to be uploaded to a memory address containing the personal information data of the individual. It is possible for hackers to identify the memory address used to store the personal information data during the upload of data, and thereafter use this memory address to hack into the system and download data from the memory address.

Generally, given the sophistication of the techniques that are employed by hackers, protection methods such as encryption and coding that attempt to disguise the memory address are proving increasingly ineffective as the numerical relationship that is used to create the encrypted memory address or the coded memory address can be eventually broken by a hacker. Therefore, using the current data upload methods, and the current protection techniques, the security and integrity of the personal information data has become more difficult to maintain.

A problem with the distribution of large amounts of data over the digital networks is that the data may be intercepted by third parties. Networks such as the internet or large company networks are vulnerable to abuse by unscrupulous third parties through unauthorised access techniques, commonly known as "cybercrime" or "hacking" a network system. Cybercrime, which is carried out by hackers, is an increasing problem and can affect all manner of different networks.

Hackers can intercept a data packet that has been sent by a genuine user and hack that data packet to identify the memory address in that data packet. The memory address can then be used by the hacker for fraudulent activity. Identity theft has become increasingly common over the past number of years and by using even the smallest amount of personal information, hackers can slowly build up a set of detailed information about an individual. The hackers will try to obtain some personal information data regarding an individual through hacking into a memory address, and subsequently attempt to build up a set of detailed personal information data regarding the individual by using the personal information data they obtained to elicit more personal information about the individual from other sources on the digital network. Therefore, even if the personal information that is obtained from the hacked memory address is not valuable in itself, a hacker can use the information to gradually build up a profile of the individual until valuable information has been obtained.

Often, knowledge of some details such as an individual's name, address and date of birth, will allow a hacker to obtain that individual's social security number from a governmental department. Now, with the individual's social security number along with their name, address and date of birth, further details may be garnered and eventually, with sufficient personal information, harmful or criminal activity can be carried out by the hacker either to the individual or in the individual's name without their knowledge.

To combat identity theft, and general unauthorised access to sensitive data, organisations have to become more wary about the manner in which personal information data can be accessed, by whom it may be accessed, and how the personal information data is disseminated thereafter. The current protection methods are not sufficient to prevent a hacker from accessing a memory address once the hacker has expunged the memory address from a data packet during a data upload to the data processing unit.

The security of the data in the digital networks is of paramount importance.

It is an object of the present invention to overcome at least some of the aforementioned problems relating to the secure transmission of data. It is necessary to develop a simple, widely-implementable data security system which can solve the above mentioned problems of accessing secure data, which is robust to attacks by hackers and the like.

### Statements of the Invention

The present invention is directed to a secure data transfer method to allow the upload of data from one of a plurality of communication devices over a data transmission network to a data processing unit; comprising the following steps of one of the communication devices transmits a data symbol to the data processing unit, whereby, the data symbol comprises an address frame and a payload frame, and the address frame contains a publicly disseminated address and the payload frame contains the data to be uploaded; and wherein, the data processing unit receives the data symbol and extracts the publicly disseminated address from the address frame; a one-way linked-list database in the data processing unit maps the publicly disseminated address to a secure master address; the data processing unit extracts the data to be uploaded from the payload frame and writes the data to a data field in the data processing unit associated with the secure master address; whereby the one-way linked-list database is prohibited from mapping the master address back to the publicly disseminated address; and, data can only be downloaded from the central processing unit to one of the plurality of communication devices by using the master address to locate the associated data field containing the data to be downloaded; wherein, the communication device is a restricted access communication device and the data to be uploaded and/or downloaded is individual-specific private data records; and, the master address cannot be determined from the publicly disseminated address by the database.

The advantage of using a one-way linked list is that any party, whether they are a hacker or an authorised user, may access the secure master address without the possibility of knowing what that secure master address is. The one-way linked list offers a protective barrier between the party and the secure master address as there is no reversible numerical relationship between the publicly disseminated address and the master address.

In a further embodiment, the master address has the same format as the publicly disseminated address.

In another embodiment, the data to be uploaded and/or downloaded is one of an individual's medical record, criminal record or taxation record; the transmitting communication device is one of a medical facility, police station or taxation office respectively; the data processing unit is a governmental, multi-departmental installation; and, the master address is the individual's social welfare number.

In yet a further embodiment, the data to be uploaded and/or downloaded is an individual's financial transaction records; the transmitting communication device is a vendor; the data processing unit is the individual's bank; and, the master address is the individual's credit card number.

In yet another embodiment, the data to be uploaded and/or downloaded is a company's additional new stock records; the transmitting communication device is a third party supplier; the data processing unit is the company's computer network; and, the master address is the company's existing stock records.

In still a further embodiment, the data processing unit further comprises an issuing unit which issues address for public dissemination, and uses the database to correlate the issued address to the appropriate master address.

The invention is further directed towards a secure system to upload data from one of a plurality of communication devices over a data transmission network to a data processing unit; the system comprising one of the plurality of communication devices which transmits a data symbol to the data processing unit, whereby, the data symbol comprises an address frame and a payload frame, and the address frame contains a publicly disseminated address and the payload frame contains the data to be uploaded to the data processing unit, and wherein, the data processing unit is operable to receive the data symbol and comprises an extraction means to extract the publicly disseminated address from the address frame; the system further comprises a one-way linked list database in the data processing unit which maps the publicly disseminated address to a secure master address; the extraction means further acting to extract the data to be uploaded from the payload frame; the data processing unit comprising writing means to write the data to a data field associated with the secure master address in the data processing unit; whereby the one-way linked-list database is prohibited from mapping the master address to the publicly disseminated address; and, data can only be downloaded from the central processing unit to one of the plurality of communication devices by using the master address to locate the associated data field containing the data to be downloaded; wherein, the communication device is a restricted access communication device and the data to be uploaded and/or downloaded is individual-specific private data records; and, the master address cannot be determined from the publicly disseminated address without the aid of the database.

The advantage of using a one-way linked list is that any party, whether they are a hacker or an authorised user, may access the secure master address without the possibility of knowing what that secure master address is. The one-way linked list offers a protective barrier between the party and the secure master address as there is no reversible numerical relationship between the publicly disseminated address and the master address.

In another embodiment, the master address has the same format as the publicly disseminated address.

### Detailed Description of Embodiments

The invention will be more clearly understood by the following description of some embodiments thereof, given by way of example only with reference to the accompanying drawing, in which:

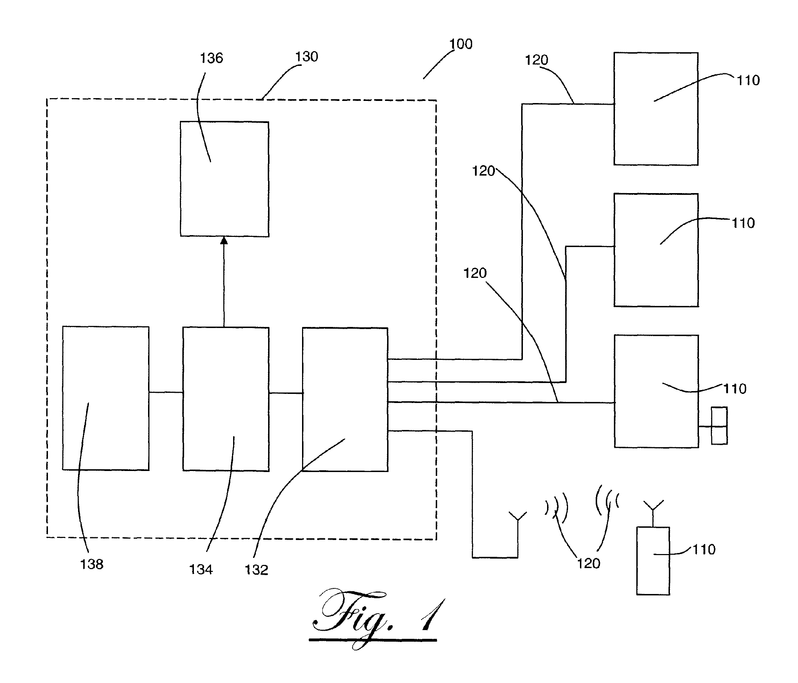

Fig. 1 is a circuit representation of the system of the present invention.

Referring to the Fig. 1, there is provided a data transmission system according to the invention indicated generally by the reference numeral 100. In particular, the system 100 will be described in relation to the upload and download of data. The system 100 comprises a plurality of communication devices 110, a plurality of communications channels 120 and a data processing unit 130. The data processing unit 130 comprises a front-end input/output (I/O) unit 132 for extracting the relevant data from received data symbols (not shown). A central processor 134 is connected to the I/O unit 132 and is further connected to a one-way linked list database 136 and a data storage unit 138 comprising a plurality of data fields (not shown). The data storage unit 138 is a general purpose database which stores information regarding an individual's file, such as information regarding the individual and various conditions which apply to each individual's file. The one-way linked list database 136 stores the mapping between an individual's secure master address and any associated publicly disseminated addresses, using, for instance, some type of linked-list mechanism. The one-way linked list mechanism in the one-way linked list database 138 comprises a mapping structure which associates and links each publicly disseminated address with a master address. The mapping structure is arranged such that every element in the set of publicly disseminated addresses is uniquely mapped to an element in the set of master address. there is no general alphanumerical relationship that may describe the mapping structure. In a further embodiment, a number of publicly disseminated addresses are mapped back to the same master address.

The data storage unit 138 and the one-way linked list database 136 are shown separately only to illustrate the type of information which may be maintained by the data processing unit 130; the information in the data storage unit 138 and the one-way linked list database 136 can be commingled in a common database in a manner well understood by those having skill in the data processing arts. For instance, each publicly disseminated address can be stored in a data field, which identifies its associated secure master address via the one-way linked list database 136 in the commingled database, and data and various conditions regarding the use of data stored at the secure master address is in the data storage unit 138 of the commingled database.

The data storage unit 138 may comprise a plurality of grouped data fields, called data sets (not shown). These data sets are accessible via the secure master address and only via this master address. Therefore, it is possible to download or upload data to the secure master address if the secure master address is known, but it is only possible to upload data to the secure master address if the publicly disseminated address is known. Thus, data from the plurality of fields in the data sets may be uploaded or downloaded using the master address and the appropriate control operator.

The communication devices 110 upload data to the data processing unit 130 using a publicly disseminated address (not shown) across the communications channel 120. The data is sent in data symbols (not shown) over the communications network 120, and these data symbols contain an address frame and a payload frame. The I/O unit 132 extracts the publicly disseminated address from the address frame of the data symbol, and the central processor 134 transmits the publicly disseminated address to the one-way linked list database 136. The publicly disseminated address is linked to the appropriate master address and this master address is used to access the correct data set in the data storage unit 138. The publicly disseminated data address is mapped to the master data address via a one-way linked list mechanism in the one-way linked list database 136 which does not incorporate any alphanumerical relationship between the publicly disseminated data address and the master data address.

The publicly disseminated address may also have some restrictions imposed on it, by a set of rules contained in the data processing unit 130. The central processor 134 will access the data storage unit 138 via the appropriate master address and will only allow certain predetermined operands to be carried out on the datasets in the data storage unit 138. These operands may be limited to some of the datasets stored under the master address or may apply to all of the datasets stored under the master address. The operands could comprise, but are not limited to, read-only, append data, overwrite data, copy data, upload only, download only and the like. Moreover, the communications devices 110 may only be permitted to upload data once, or a predetermined number of times, to the master address via the publicly disseminated address, or, the communications devices 110 may be restricted to upload data during predetermined time periods, or, the communications devices 110 may be restricted to uploading a predetermined amount of data to the master address via the publicly disseminated address. It will be appreciated that many variations can be envisaged.

Therefore, a particular publicly disseminated address will allow access via the master address to data stored at the master address in the data storage unit 138 and the same particular publicly disseminated address will also impose rules as to which operands are allowable on the accessed data in the data storage unit 138.

In this manner, an individual may dispense personal information in the form of a publicly disseminated address without fear that this information could be used by unwanted third parties. The third parties are given restricted access to the individual's information.

In one embodiment, each dataset may relate to an individual. The data fields may be further grouped into sub-datasets to relate to the medical history of the individual, the criminal record of the individual and the taxation history of the individual. A government could maintain all of these records in the same database as it would be more cost efficient to have one large database in a single location rather than a plurality of smaller databases in multiple locations requiring multiple back-ups, multiple service teams, and multiple operation units to run and maintain each database.

In order to restrict access to the third party, in this example a taxation office, a publicly disseminated address specifically linked to the master address appropriate for the individual's dataset is issued by the data processing unit 130, and the relevant taxation office (not shown) may use this publicly disseminated address to access the appropriate sub-dataset to upload taxation-related data to the individual's taxation records, without any possibility of downloading taxation data or any other medical or criminal records either.

The method is applicable over a wide range of businesses, even what some may consider to be simply a method for doing business. One must appreciate that in business, as in any other industry, security is of paramount importance. Prior to e-commerce, security boxes such as safe rooms were used. In the modern digitally-based world, this required for security has not lessened and thus, the publicly disseminated address could be in the form of a payment number having the same format as a credit card number. An individual's credit card number forms the master address. Payment may be made to an individual's credit card account via the publicly disseminated payment number. The individual does not have to give their credit card number details to a third party and therefore obviates the risk that the third party would use these credit card number details for fraudulent activity. The payment number is only linked to the credit card account when data is being uploaded, which is to say funds are being transferred to the individual's credit card account. Data cannot be downloaded, which is to say funds cannot be drawn from the individual's credit card account by the third party.

This communications channel 120 may form part of a network such as the internet, a Wireless Local Area Network (WLAN), a Wide Area Network (WAN) or simply the Plain Old Telephone Service (POTS) network.

The present invention represents a new form of a data upload method between a communications device and a data processing unit on a digital data network, the data upload method using a publicly disseminated address that is limited so as to prevent it being used for the download of any data. In other words, the present invention involves a publicly disseminated address format, that may include routing information to direct data information to a particular organisation among a plurality of organisations on the digital data network and a unique identification of a user associated with the particular organisation. The publicly disseminated address format may also include an identifier identifying the publicly disseminated address as a memory address to which data can be upload but from which data cannot be downloaded. The publicly disseminated address format can follow a standard master address format. The publicly disseminated address can alternatively follow a standard master address format and omit any identifier, but the routing information be for an organisation that is restricted to communications where data is received.

This publicly disseminated address can therefore be revealed without any concern for fraudulent misuse since it can only be used to upload data and therefore is of no benefit to any other party, such as a hacker.

To incorporate this invention with an existing data transmission system, a publicly disseminated address will be linked to an existing master address so an individual's personal information data file would have a combined file with two numbers: one for downloading and uploading data (the master address) and one for only uploading data (the publicly disseminated address). Indeed other variations on this can be readily envisaged.

The publicly disseminated address could be stored within a software package for easy use on the internet without requiring the individual to look up their publicly disseminated address to access their personal information data file. Since a publicly disseminated address cannot be used (or misused) for downloading data from a personal information data file it can be freely disseminated to anybody.

In the specification the terms "comprise, comprises, comprised and comprising" or any variation thereof and the terms "include, includes, included and including" or any variation thereof are considered to be totally interchangeable and they should all be afforded the widest possible interpretation and vice versa.

The invention is not limited to the embodiments hereinbefore described which may be varied in both construction and detail with the scope of the appended claims.

## Claims

1. A secure data transfer method to allow the upload of data from one of a plurality of communication devices over a data transmission network to a data processing unit;
comprising the following steps:
one of the communication devices transmits a data symbol to the data processing unit, whereby, the data symbol comprises an address frame and a payload frame, and the address frame contains a publicly disseminated address and the payload frame contains the data to be uploaded; and wherein,
the data processing unit receives the data symbol and extracts the publicly disseminated address from the address frame;
a one-way linked-list database in the data processing unit maps the publicly disseminated address to a secure master address;
the data processing unit extracts the data to be uploaded from the payload frame and writes the data to a data field in the data processing unit associated with the secure master address;
whereby the one-way linked-list database is prohibited from mapping the master address back to the publicly disseminated address; and,
data can only be downloaded from the central processing unit to one of the plurality of communication devices by using the master address to locate the associated data field containing the data to be downloaded;
wherein, the communication device is a restricted access communication device and the data to be uploaded and/or downloaded is individual-specific private data records; and,
the master address cannot be determined from the publicly disseminated address by the database.

2. A method according to claim 1, wherein,
the master address has the same format as the publicly disseminated address.

3. A method according to claims 1 or 2, wherein,
the data to be uploaded and/or downloaded is one of an individual's medical record, criminal record or taxation record;
the transmitting communication device is one of a medical facility, police station or taxation office respectively;
the data processing unit is a governmental, multi-departmental installation; and,
the master address is the individual's social welfare number.

4. A method according to claims 1 or 2, wherein,
the data to be uploaded and/or downloaded is an individual's financial transaction records;
the transmitting communication device is a vendor;
the data processing unit is the individual's bank; and,
the master address is the individual's credit card number.

5. A method according to claims 1 or 2, wherein,
the data to be uploaded and/or downloaded is a company's additional new stock records;
the transmitting communication device is a third party supplier;
the data processing unit is the company's computer network; and,
the master address is the company's existing stock records.

6. A method according to claim 4, wherein,
the data processing unit further comprises an issuing unit which issues address for public dissemination, and uses the database to correlate the issued address to the appropriate master address.

7. A secure system to upload data from one of a plurality of communication devices over a data transmission network to a data processing unit;
the system comprising one of the plurality of communication devices which transmits a data symbol to the data processing unit, whereby, the data symbol comprises an address frame and a payload frame, and the address frame contains a publicly disseminated address and the payload frame contains the data to be uploaded to the data processing unit, and wherein,
the data processing unit is operable to receive the data symbol and comprises an extraction means to extract the publicly disseminated address from the address frame;
the system further comprises a one-way linked list database in the data processing unit which maps the publicly disseminated address to a secure master address;
the extraction means further acting to extract the data to be uploaded from the payload frame;
the data processing unit comprising writing means to write the data to a data field associated with the secure master address in the data processing unit;
whereby the one-way linked-list database is prohibited from mapping the master address to the publicly disseminated address; and,
data can only be downloaded from the central processing unit to one of the plurality of communication devices by using the master address to locate the associated data field containing the data to be downloaded;
wherein, the communication device is a restricted access communication device and the data to be uploaded and/or downloaded is individual-specific private data records; and,
the master address cannot be determined from the publicly disseminated address without the aid of the database.

8. A system according to claim 7, wherein,
the master address has the same format as the publicly disseminated address.
